# EUROPEAN PATENT SPECIFICATION

(11) **EP 0 539 146 B1**
(45) Date of publication and mention of the grant of the patent: **20.12.1995**
(21) Application number: 92309554.1
(22) Date of filing: 20.10.1992
(51) Int. Cl.: G01C 21/20

(54) **Navigation system**
Navigationssystem
Système de navigation

(30) Priority: 22.10.1991 JP 274341/91
(43) Date of publication of application: 28.04.1993
(73) Proprietor: PIONEER ELECTRONIC CORPORATION, Meguro-ku Tokyo-to (JP)
(72) Inventor: Araki, Morio, c/o Pioneer Electronic Corp., Kawagoe-shi, Saitama-ken (JP); Arakawa, Takeharu, c/o Pioneer Electronic Corp., Kawagoe-shi, Saitama-ken (JP); Nobe, Kenichi, c/o Pioneer Electronic Corp., Kawagoe-shi, Saitama-ken (JP); Hamada, Michiaki, c/o Pioneer Electronic Corp., Meguro-ku, Tokyo-to (JP); Someya, Chiharu, c/o Pioneer Electronic Corp., Meguro-ku, Tokyo-to (JP); Hirayama, Naofumi, c/o Pioneer Electronic Corp., Meguro-ku, Tokyo-to (JP); Siota, Tomoki, c/o Pioneer Electronic Corp., Meguro-ku, Tokyo-to (JP)
(74) Representative: Brunner, Michael John

(56) References cited:
- VEHICLE NAVIGATION AND INFORMATION SYSTEMS 11 September 1989, TORONTO CANADA pages 139 - 145 , XP89879 TAKAHARU SAITO ET AL 'AUTOMOBILE NAVIGATION SYSTEM USING BEACON INFORMATION.'

## Description

### BACKGROUND OF THE INVENTION

### 1. Field of the Invention

The present invention relates to a navigation system which draws and displays a map showing a peripheral area of a movable body in synchronism with movement of the movable body, and more particularly to a navigation system which displays supplementary service information on a picture plane on which the peripheral area map of the movable body is displayed.

### 2. Description of the Related Art

There is a GPS (Global Positioning System) type navigation system as a position measuring device using satellites, for movable bodies such as vehicles, aeroplanes, ships and so on. The GPS type navigation system generally receives electric waves emitted from three GPS satellites or more, and identifies the position of the receiving point by referring to pseudo-distance data including a time offset of a receiver based on the distance between each GPS satellite and the receiving point, and position data indicating each GPS satellite.

There is a GPS navigation system which carries out a map matching between GPS position measurement data and map data stored in a recording medium, such as a CD-ROM (Compact Disk-Read Only Memory), and displays the current position and the traveling direction on the map displayed on the display unit.

Such a system is disclosed in Vehicle Navigation and Information Systems, 11 Sept 1989, Toronto, Canada, pages 139-145, XP89879, Takaharu Saito et al, 'Automobile Navigation Systems using Beacon Information'.

The above GPS navigation system displays various pieces of supplementary service information on the map displayed on the picture plane. The supplementary service information includes various pieces of information indicating the current position and travelling direction of the movable body, the positions of various facilities, such as parking places, hospitals, eating houses and places for amusement, the distance to the target place, and the scales of the displayed map.

The above mentioned navigation system superimposes a display of various pieces of supplementary service information on a display of the map. That is, the supplementary service information and the map are mixed on the same picture plane, which is limited in size. Hence, it is difficult for the user to visually obtain necessary information from the picture plane on which the supplementary service information and the map are displayed on the same picture plane. In order to resolve the above problem, it may be possible to set a background portion of a display of the supplementary service information to a single color, such as black or white in order to improve perceptibility of the supplementary service information. However, the map, which is the most important data in navigation, is partially masked by the above background portion, and map information concerning the masked map area is lost.

Particularly, when the map display is scrolled, a travelling route displayed at an end of the picture plane in the travelling direction is masked, and hence the user cannot confirm the desired travelling direction. The supplementary service information is likely displayed in a peripheral end portion of the displayed map, and hence the user has such an illusion that the effective display area for the map is narrowed.

### SUMMARY OF THE INVENTION

It is therefore an object of the present invention to provide a navigation system capable of providing improved perceptibility of supplementary service information superimposed on a display of the map and easily obtaining map information displayed on the entire picture plane.

According to the present invention, the above mentioned object can be achieved by a navigation system provided with: a storage device for storing map data and supplementary service data; a position detecting device for detecting a current position of a movable body to which the navigation system is equipped; a display device for displaying a map image; and a display control device, coupled to the storage device, the position detecting device and the display device, for reading the stored map data and the stored supplementary service data corresponding to a peripheral area of the detected current position, making the display device display the map image and a supplementary service data image having a transparent background pattern superimposed on the map image, such that a portion of the map image at the supplementary service data image is displayed through the transparent background pattern, on the basis of the read map data and the read supplementary service data.

Accordingly, the map image can be displayed at not only the area other than the supplementary service data image, but also the area of the supplementary service data image through the transparent background pattern; such as a striped background pattern. Thus, the area at the supplementary service data image, which is often the most important map information for navigation, can be seen through the transparent background pattern, and, at the same time, the supplementary service data superimposed on the map image can be easily seen.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a diagram showing a principle of the present invention;
Fig. 2 is a block diagram of an embodiment of the present invention;
Fig. 3 is a diagram showing a state in which data is stored in a CD-ROM disk;
Fig. 4 is a diagram showing a state in which data is stored in the CD-ROM disk;
Fig. 5 is a diagram showing a state in which data is stored in the CD-ROM disk;
FIG. 6 is a diagram showing one display state in the embodiment of Fig.2;
FIG. 7 is a diagram showing another display state in the embodiment of Fig.2; and
FIG. 8 is a diagram showing another display state in the embodiment of Fig.2.

### DETAILED DESCRIPTION OF THE PREFERRED EMBODIMENTS

Referring to the accompanying drawings, an embodiment of the present invention will be now explained.

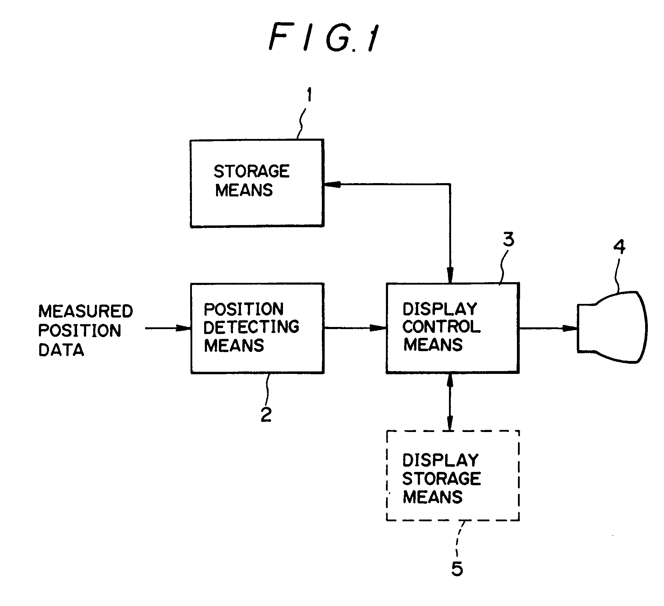

FIG. 1 shows the principle of the present invention. A navigation system shown in FIG. 1 comprises a storage means 1, a position detecting means 2, a display control means 3, and a display means 4.

The storage means 1 stores map data, supplementary service data and so on. The position detecting means 2 detects, on the basis of data measured, the current position of a movable body to which the navigation system is equipped.

The display control means 3 sequentially reads the map data showing the periphery of the area in which the movable body exists from the storage means 1 in accordance with the movement of the movable body, and outputs the readout map data, as map display data, to the display means 4. The display means 4 generates a map image from the map display data from the display control means 3, and displays it. Further, the display control means 3 has the function of reading the supplementary service data relating to the map display data currently displayed from the storage means 1, and generates background pattern data that forms a background of an area in which the supplementary service data is displayed so that the background has a striped pattern having transparent portions. Furthermore, the display control means 3 generates superimposed supplementary data indicating the above background pattern data and the supplementary data, which are to be superimposed on the map display data forming the map image. A display storage means 5 is preferably provided in the navigation system. The display storage means 5 is coupled to the display control means 3 to temporarily store these data formed in the display control means 3.

In this manner, the striped background image of the area in which the supplementary service data is displayed has the transparent portions spaced apart from each other. Hence, it is possible to obtain map display data, which is the most important information for navigation, through the striped background pattern and to easily read the supplementary service data superimposed on the map image.

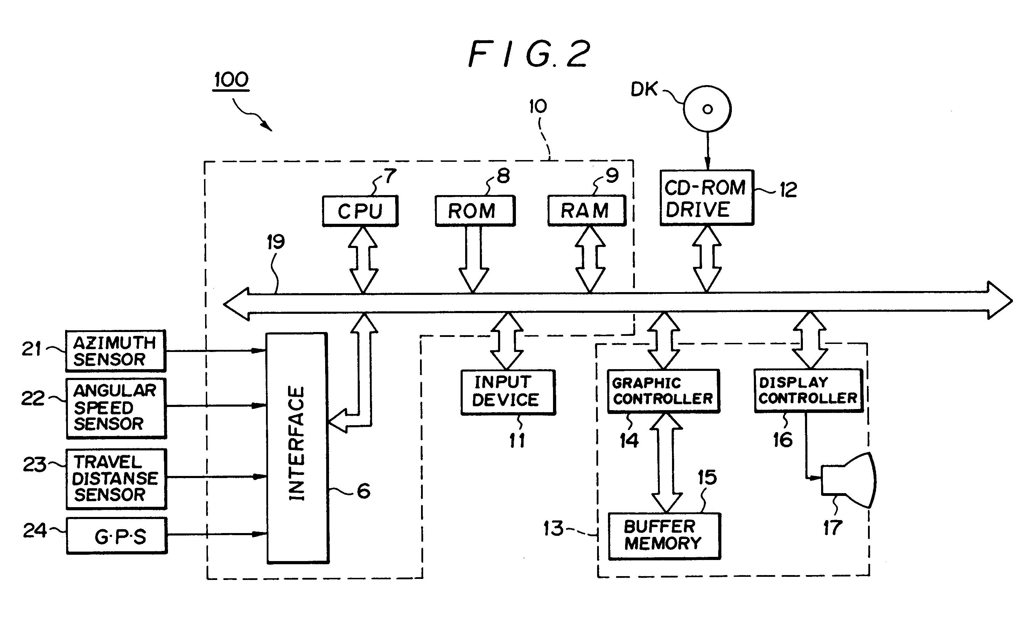

Fig. 2 is a block diagram of a basic structure in which the present invention is applied to an on-vehicle navigation system.

An on-vehicle navigation system 100 shown in Fig. 2 includes an azimuth sensor 21, an angular speed sensor 22, a travel distance sensor 23, a GPS receiver 24, a system controller 10, an input device 11, a CD-ROM drive 12 and a display unit 13. The azimuth sensor 21 detects the geomagnetism and generates azimuth data indicating the direction in which the vehicle is travelling. The angular speed sensor 22 detects an angular speed when the vehicle turns. The travel distance sensor 23 detects the number of revolutions of a shaft and integrates it to thereby generate travel distance data. The GPS receiver 24 receives an electric wave from a GPS satellite, and generates GPS measurement position data therefrom. The system controller 10 controls the whole navigation system on the basis of the azimuth data, the angular speed data, the travel distance data and the GPS position measurement data. The input device 11 is used for inputting various data pieces to the navigation system 100. The CD-ROM drive 12 reads various data pieces from a CD-ROM disk DK and outputs the readout data pieces to a bus line 19 under the control of the system controller 10. The display unit 13 displays various display data pieces under the control of the system controller 10.

The system controller 10 includes an interface unit 6, a CPU 7, a ROM (Read Only Memory) 8, and a RAM (Random Access Memory) 9. The interface unit 6 establishes an interface with external devices. The CPU 7 controls the whole system controller 10. The ROM 8 stores control programs used for controlling the system controller 10. The RAM 9 includes a non-volatile memory, and stores various data segments. The system controller 10 is connected, via the bus line 19, to the input device 11, the CD-ROM drive 12 and the display unit 13.

The display unit 13 includes a graphic controller 14, a buffer memory 15, a display controller 16, and a display device 17. The graphic controller 14 controls the entire operation of the display unit 13 on the basis of control data supplied from the CPU 7 via the bus line 19. The buffer memory 15 is formed with, for example, a VRAM (Video RAM), and temporarily stores image information which can be soon displayed. The display device 17 is formed with, for example, a LCD (Liquid Crystal Display) or a CRT (Cathode Ray Tube). The display controller 16 controls the display device 17 on the basis of the image data output from the graphic controller 14.

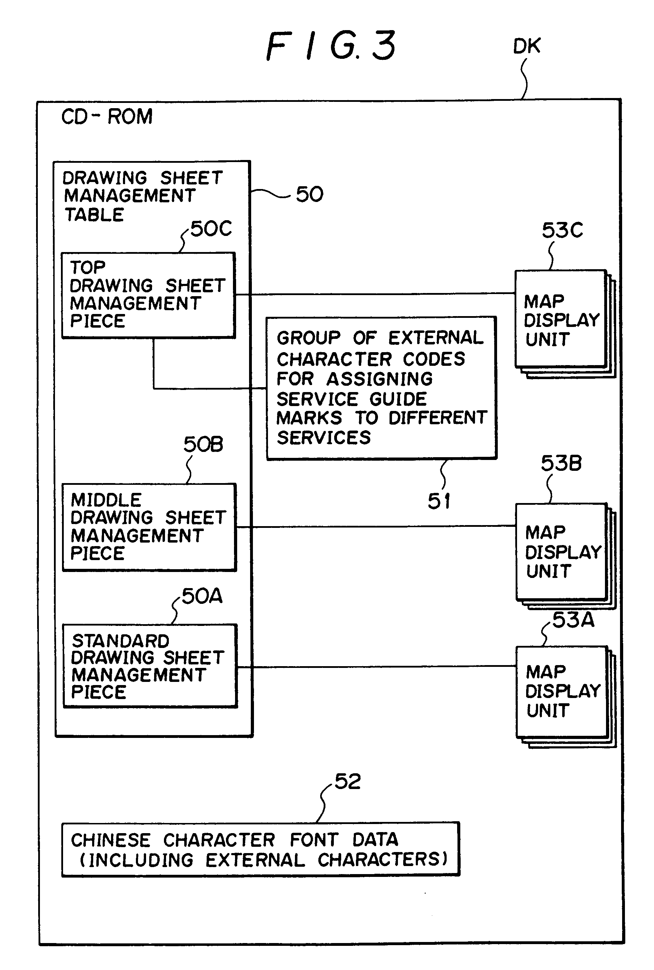

The structure of data stored in the CD-ROM disk DK will now be described with reference to Figs. 3 through 5.

In Fig.3, the CD-ROM disk DK stores a drawing sheet management table 50, a group 51 of external-character codes for assigning service guide marks to be displayed to the different contents of services provided by particular facilities, Chinese character font data 52, and map display units 53A, 53B and 53C. Examples of the contents of services of the particular facilities are Japanese food restaurants, western food restaurants, hotels, movie theaters, leisure facilities, and so on. The drawing sheet management table 50 stores data used for managing map data for use in display. The font data 52 stores data indicating fonts of displayable characters including external characters. The map display unit data pieces 53A, 53B and 53C are respectively blocks of data segments for displaying maps on the basis of the contents of the drawing sheet management table 50.

The drawing sheet management table 50 has a standard drawing sheet management piece 50A, a middle drawing sheet management piece 50B, and a top drawing sheet management piece 50C. The standard drawing sheet management piece 50A manages data on small-scale maps showing narrow areas. The middle drawing sheet management piece 50B manages data on middle-scale maps showing middle areas. The top drawing sheet management piece 50C manages data on large-scale maps showing wide areas. A plurality of map display units 53A, ..., 53A are related to the standard drawing sheet management piece 50. A plurality of map display units 53B, ..., 53B are related to the middle drawing sheet management piece 50B. A plurality of map display units 53C, ..., 53C are related to the top drawing sheet management piece 50C. The CPU 7 (in Fig.2) refers to a plurality of map display units on the basis of the management pieces 50A, 50B and 50C, and transfers various data pieces to the RAM 9 and the buffer memory 15 in order to display the map and other information pieces.

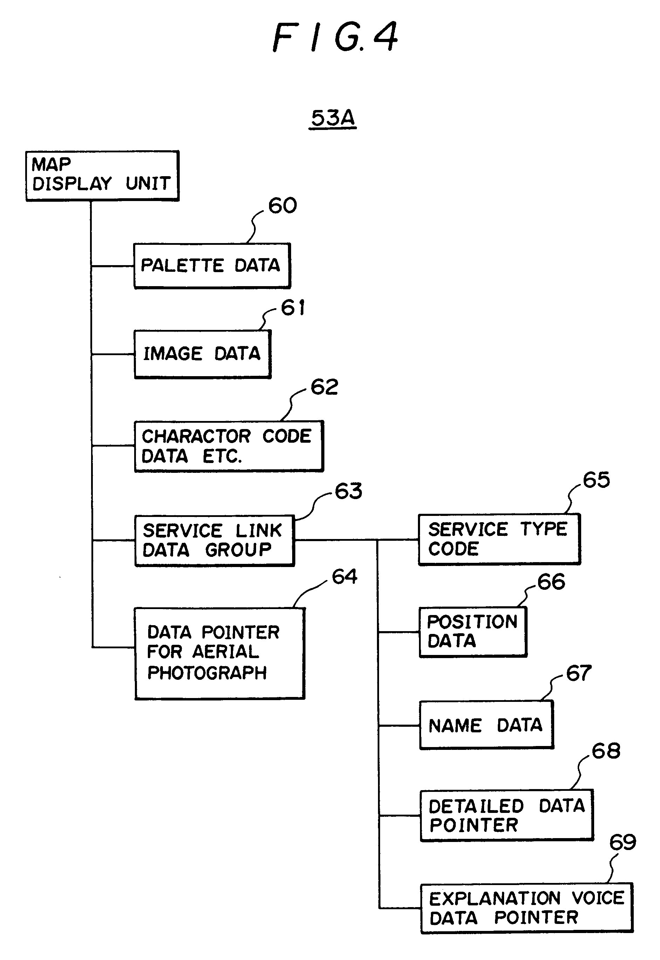

Fig. 4 shows the structure of each of the map display units 53A as an example of the structure of data in the map display units. The other map display units 53B and 53C are configured in the same manner as the map display units 53A. Each of the map display units 53A includes palette data 60, image data 61, character code data 62, a group 63 of pieces of service link data, and a data pointer 64 for aerial photograph. The palette data 60 is color data for a colored display of map. The image data 61 forms an image of the displayed map. The character code data 62 indicates codes of characters to be displayed on the map display. The group 63 of pieces of service link data forms an address table that stores the addresses of storage areas formed on the CD-ROM disk DK in which service information segments showing the contents of services provided by the particular facilities are stored.

The service link data group 63 includes service type code data 65, position data 66, name data 67, a detailed data pointer 68, and an explanation voice data pointer 69. The service type code data 65 contains service type codes assigned to the different types of services provided by the particular facilities, such as leisure facilities, accommodation facilities and restaurants. The position data 66 contains data pieces respectively indicating the locations of the particular facilities. The name data 67 includes data pieces showing the names of the facilities. The detailed data pointer 68 functions as an address table showing the addresses of storage areas in the CD-ROM disk DK in which detailed information concerning the services of the facilities. The explanation voice data pointer 69 functions as an address table in which the addresses of storage areas in the CD-ROM disk DK in which voice data segments for explaining the facilities are stored.

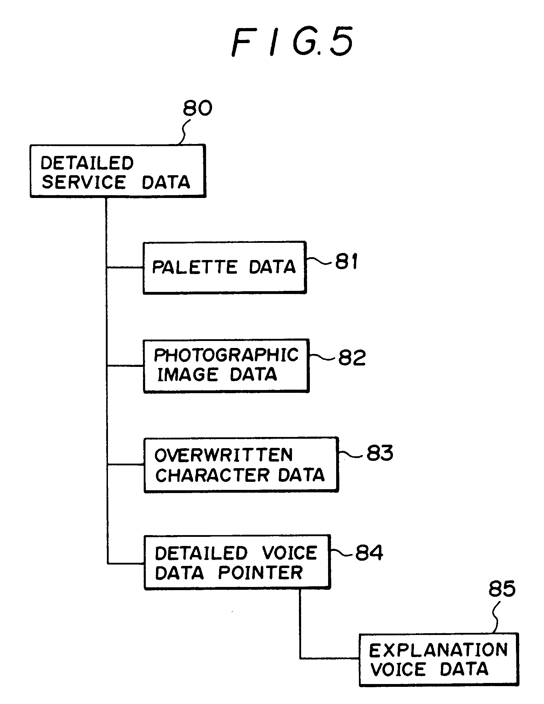

A storage area on the CD-ROM disk DK specified by the detailed data pointer 68 (in Fig.4) stores detailed service data 80 for each of the facilities, as shown in Fig. 5. The detailed service data 80 contains palette data 81, photographic image data 82, overwritten character data 83, and a detailed voice data pointer 84. The palette data 81 is data indicating colors forming photograph data related to the respective facilities. The photographic image data 82 is image data that shows, for example, photographic images of the external appearance and the interior of the facilities, and photographic images of menus indicating recommended food. The overwritten character data 83 indicates characters (the name of the facility) superimposed on the picture plane of the display device 17. The detailed voice data pointer 84 indicates the address of a storage area on the CD-ROM disk DK in which explanation voice data 85 for a voice or acoustic message which explains the facility is stored.

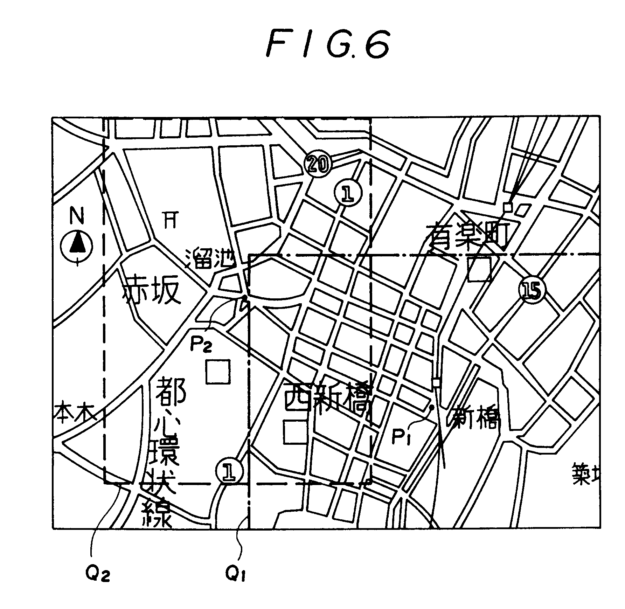

The display operation of the present invention will be described with reference to FIGS. 6 through 8.

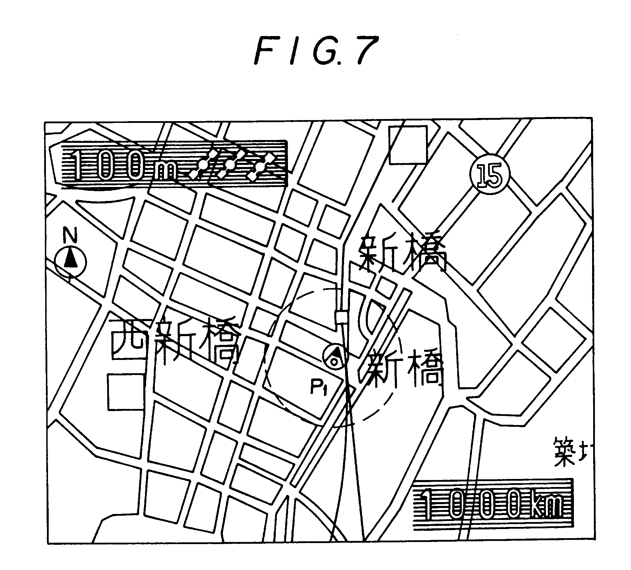

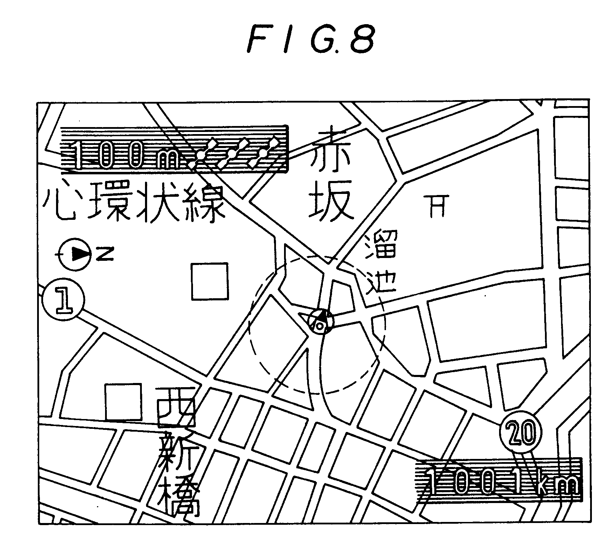

It will now be assumed that a vehicle is traveling from point P1 to point P2 located between a departure point A (which is located outside of the map shown in FIG. 6 and is not shown) to a destination point B (which is located outside of the map shown in FIG. 6 and is not shown). If the point P1 corresponds to the current position of the vehicle, the display unit 17 in FIG.2 has a display image as shown in FIG. 7, which corresponds to a map area Q1 in FIG.6 (within an area defined by a one-dot chained line). If the point P2 corresponds to the current position of the vehicle, the display unit 17 in FIG.2 has a display image as shown in FIG. 8, which corresponds to a map area Q2 in FIG.6 (within an area defined by a chained line).

The system controller 10 detects that the current position of the vehicle is the point P1. The graphic controller 14 reads out displays map data showing the periphery of the point P1 stored in the buffer memory 15 beforehand, on the basis of the detected position data, and generates map display data. Further, the graphic controller 14 reads supplementary service data related to the above map display data from the system controller 10 or the buffer memory 15, and generates data forming the striped background pattern, in which transparent areas are repeatedly arranged, at the background of the supplemental service data to be displayed. Then, the graphic controller 14 combines the striped background pattern and the supplementary service data with each other, and thereby generates superimposed striped supplementary data.

The graphic controller 14 combines the generated map display data and the superimposed supplementary data with each other, and makes the display unit 17 display the image shown in FIG. 7 in which the supplementary service data is superimposed on the map image. The supplementary service data displayed on the lower right side of the display image "1000 km" shows that the total travel distance from the departure point A to the current point P1 of the vehicle is 1000 km. The supplementary service data displayed on the upper left side of the display image "100 m" shows the radius of a circular area around the current point P1 in order to have the user understand the reduced scale of the map image. The striped background pattern functions to improve contrast of display of the supplementary service data and to hence improve perceptibility. Further, map information displayed on the display unit 17 can be perceived through the striped background pattern, and hence the route from the current point P1 to the point P2 can be easily confirmed on the display.

When the vehicle has traveled and reached the point P2, the image is displayed on the display unit 17, as shown in FIG. 8. Pieces of supplementary service data are displayed on the lower right and upper left sides of the display image respectively as in the case shown in FIG. 7. A movement distance of 1 km is added to the previous total travel distance equal to 1000 km, and the updated total travel distance of 1001 km is indicated, as the supplementary service data.

Map information underlying the display areas for displaying supplementary service data on the display unit 17 shown in FIGS. 7 and 8 can be perceived through the striped background patterns. Further the map image can be displayed on the entire picture plane of the display unit 17. Hence, the displayable area of the display unit 17 can be efficiently utilized, and the user does not have such a feeling that the picture plane is narrowed.

As described above in detail, according to the present embodiment, the striped background image of the area in which the supplementary service data is displayed has the transparent portions spaced apart from each other. Hence, it is possible to obtain map display data, which is the most important information for navigation, through the striped background pattern and to easily read the supplementary service data superimposed on the map image. In this manner, the perceptibility of supplementary service information superimposed on a display of the map can be improved, and the map information displayed on the entire picture plane, can be easily obtained.

In the above mentioned embodiment, the striped background pattern is employed as the transparent background pattern. Other type of transparent background pattern, such as a dotted background pattern, a transparent color background pattern, a mesh background pattern, etc. can be utilized in place of the striped background pattern, as long as the transparent background image allows the map image to be displayed therethrough.

The present invention includes not only the aforementioned GPS systems but also self-sustaining type navigation systems, in which a two-dimensional displacement (vector quantity) of the movable body by using azimuth data from an azimuth sensor and speed data from a speed sensor, and adds the two-dimensional displacement to a reference point, are obtained.

The navigation system of the above mentioned embodiment is an on-vehicle type. However, the present invention includes navigation systems for movable bodies such as men, ships, and aeroplanes.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A navigation system (100) comprising:
a display means (13) for displaying a map image,
a storage means (DK) for storing map data and supplementary service data;
a position detecting means (21, 22, 23, 24) for detecting a current position of a movable body to which the navigation system is equipped; and
a display control means (10), coupled to said storage means, said position detecting means and said display means, for reading the stored map data and the stored supplementary service data corresponding to a peripheral area of the detected current position, characterized in that said display control means make said display means display the map image and a supplementary service data image having a transparent background pattern superimposed on the map image, such that a portion of the map image at the supplementary service data image is displayed through the transparent background pattern, on the basis of the read map data and the read supplementary service data.

2. A navigation system (100) as claimed in claim 1, characterized in that said display control means (10) is adapted to make said display means (13) display the supplementary service data image having a striped background pattern superimposed on the displayed map image.

3. A navigation system (100) as claimed in claim 1 or 2, characterized in that said display control means (10) is adapted to sequentially read the map data from said storage means in accordance with the movement of the movable body.

4. A navigation system (100) as claimed in any one of claims 1 to 3, characterized in that said display control means (10) is adapted to read the stored supplementary service data related to the map display data currently displayed on the display means (13), generate superimposed supplementary data indicating the supplementary service data image having the transparent background pattern.

5. A navigation system (100) as claimed in any one of claims 1 to 4, characterized in that said storage means (DK) comprises a CD-ROM.

6. A navigation system (100) as claimed in any one of claims 1 to 5, characterized in that said position detecting means (21, 22, 23, 24) comprises at least one of a GPS receiver, an azimuth sensor, an angular speed sensor and a travel distance sensor.

7. A navigation system (100) as claimed in any one of claims 1 to 6, characterized in that said navigation system further comprises an input means (11) coupled to said display control means (10) for inputting instructions to said display control means.

8. A navigation system (100) as claimed in any one of claims 1 to 7, characterized in that said display control means (10) is adapted to make said display means (13) display the supplementary service data image in a corner portion of a display plane of said display means.

## Patentansprüche

1. Navigationssystem (100), das umfaßt:
eine Anzeigeeinrichtung (13), die ein Kartenbild anzeigt,
eine Speichereinrichtung (DK), die Kartendaten und zusätzliche Servicedaten speichert;
eine Positionserfassungseinrichtung (21, 22, 23, 24), die eine aktuelle Position eines beweglichen Körpers erfaßt, der mit dem Navigationssystem ausgestattet ist; und
eine Anzeigesteuereinrichtung (10), die mit der Speichereinrichtung, der Positionserfassungseinrichtung und der Anzeigeeinrichtung verbunden ist und die die gespeicherten Kartendaten und die gespeicherten zusätzlichen Servicedaten liest, die einem Umgebungsbereich der erfaßten aktuellen Position entsprechen, **dadurch gekennzeichnet**, daß die Anzeigesteuereinrichtung bewirkt, daß die Anzeigeeinrichtung auf der Grundlage der gelesenen Kartendaten und der gelesenen zusätzlichen Servicedaten das Kartenbild und ein Bild zusätzlicher Servicedaten mit einer transparenten Hintergrundstruktur, das in das Kartenbild eingeblendet wird, so anzeigt, daß ein Teil des Kartenbildes bei dem Bild zusätzlicher Servicedaten durch die transparente Hintergrundstruktur hindurch angezeigt wird.

2. Navigationssystem (100) nach Anspruch 1, **dadurch gekennzeichnet**, daß die Anzeigesteuereinrichtung (10) bewirkt, daß die Anzeigeeinrichtung (13) das Bild zusätzlicher Servicedaten mit einer gestreiften Hintergrundstruktur, das in das angezeigte Kartenbild eingeblendet ist, anzeigt.

3. Navigationssystem (100) nach Anspruch 1 oder Anspruch 2, **dadurch gekennzeichnet**, daß die Anzeigesteuereinrichtung (10) die Kartendaten entsprechend der Bewegung des beweglichen Körpers sequentiell aus der Speichereinrichtung ausliest.

4. Navigationssystem (100) nach einem der Ansprüche 1 bis 3**, dadurch gekennzeichnet**, daß die Anzeigesteuereinrichtung (10) die gespeicherten zusätzlichen Servicedaten, die sich auf die momentan auf der Anzeigeeinrichtung (13) angezeigten Kartenanzeigedaten beziehen, liest, und eingeblendete zusätzliche Daten erzeugt, die das Bild zusätzlicher Servicedaten mit der transparenten Hintergrundstruktur anzeigen.

5. Navigationssystem (100) nach einem der Ansprüche 1 bis 4, **dadurch gekennzeichnet**, daß die Speichereinrichtung (DK) eine CD-ROM umfaßt.

6. Navigationssystem (100) nach einem der Ansprüche 1 bis 5, **dadurch gekennzeichnet**, daß die Positionserfassungseinrichtung (21, 22, 23, 24) wenigstens einen GPS-Empfänger, einen Azimut-Sensor, einen Winkelgeschwindigkeitssensor und einen Fahrtstreckensensor umfaßt.

7. Navigationssystem (100) nach einem der Ansprüche 1 bis 6, **dadurch gekennzeichnet**, daß das Navigationssystem des weiteren eine Eingabeeinrichtung (11) umfaßt, die mit der Anzeigesteuereinrichtung (10) gekoppelt ist und der Eingabe von Befehlen an die Anzeigesteuereinrichtung dient.

8. Navigationssystem (100) nach einem der Ansprüche 1 bis 7, **dadurch gekennzeichnet**, daß die Anzeigesteuereinrichtung (10) bewirkt, daß die Anzeigeeinrichtung (13) das Bild zusätzlicher Servicedaten in einem Eckenabschnitt einer Anzeigeebene der Anzeigeeinrichtung anzeigt.

## Revendications

1. Système de navigation (100) comprenant :
un moyen d'affichage (13) pour afficher une image de carte ;
un moyen de stockage (DK) pour stocker des données de carte et des données de services supplémentaires;
un moyen de détection de position (21, 22, 23, 24) pour détecter une position courante d'un corps mobile qui est équipé du système de navigation ; et
un moyen de commande d'affichage (10), coupé audit moyen de stockage, audit moyen de détection de position et audit moyen d'affichage, pour lire les données de carte stockées et les données de services supplémentaires stockées correspondant à une zone périphérique de la position courante détectée,
caractérisé en ce que ledit moyen de commande d'affichage fait que ledit moyen d'affichage affiche l'image de carte et une image de données de services supplémentaires présentant un motif de fond transparent en superposition sur l'image de carte de telle sorte qu'une partie de l'image de carte au niveau de l'image de données de services supplémentaires soit affichée au travers du motif de fond transparent, sur la base des données de carte lues et des données de services supplémentaires lues.

2. Système de navigation (100) selon la revendication 1, caractérisé en ce que ledit moyen de commande d'affichage (10) est conçu pour faire en sorte que ledit moyen d'affichage (13) affiche l'image de données de services supplémentaires comportant un motif de fond hachuré en superposition sur l'image de carte affichée.

3. Système de navigation (100) selon la revendication 1 ou 2, caractérisé en ce que ledit moyen de commande d'affichage (10) est conçu pour lire séquentiellement les données de carte dans ledit moyen de stockage conformément au déplacement du corps mobile.

4. Système de navigation (100) selon l'une quelconque des revendications 1 à 3, caractérisé en ce que ledit moyen de commande d'affichage (10) est conçu pour lire les données de services supplémentaires stockées concernant les données d'affichage de carte présentement affichées sur le moyen d'affichage (13), pour générer des données supplémentaires en superposition indiquant l'image de données de services supplémentaires présentant le motif de fond transparent.

5. Système de navigation (100) selon l'une quelconque des revendications 1 à 4, caractérisé en ce que ledit moyen de stockage (DK) comprend un CD-ROM.

6. Système de navigation (100) selon l'une quelconque des revendications 1 à 5, caractérisé en ce que ledit moyen de détection de position (21, 22, 23, 24) comprend au moins un récepteur de GPS, un capteur d'azimut, un capteur de vitesse angulaire et un capteur de distance de déplacement.

7. Système de navigation (100) selon l'une quelconque des revendications 1 à 6, caractérisé en ce que ledit système de navigation comprend en outre un moyen d'entrée (11) coupé audit moyen de commande d'affichage (10) pour entrer des instructions sur ledit moyen de commande d'affichage.

8. Système de navigation (100) selon l'une quelconque des revendications 1 à 7, caractérisé en ce que ledit système de commande d'affichage (10) est conçu pour faire en sorte que ledit moyen d'affichage (13) affiche l'image de données de services supplémentaires dans une partie d'angle d'un plan d'affichage dudit moyen d'affichage.
